Europäisches Patentamt

European Patent Office

Office européen des brevets

(11) Publication number: **0 335 286**
**A2**

## EUROPEAN PATENT APPLICATION

(21) Application number: 89105338.1

(22) Date of filing: 25.03.89

(51) Int. Cl.⁴: **B23B 5/08** , **B21B 28/02**

(30) Priority: 28.03.88 GB 8807319

(43) Date of publication of application:
04.10.89 Bulletin 89/40

(84) Designated Contracting States:
AT BE CH DE ES FR GB IT LI NL SE

(71) Applicant: H & M MACHINERY LIMITED
70, Northumberland Avenue
Hull North Humberside, HU2 0JB(GB)

(72) Inventor: McMaster, Peter Banks
12 Allanhall Way Westella Road Kirkella
Hull North Humberside HU10 7QU(GB)

(74) Representative: Oulton, Richard John
R.J. OULTON & CO. 22 Whitefriargate
Hull North Humberside HU1 2EX(GB)

(54) Improvements in or relating to machine tools.

(57) The invention relates to machine tools and, more specifically, to a machine tool for re-profiling the rollers in a tube rolling mill roller stand assembly.

Conventionally, the re-profiling of rollers in a roller stand assembly is carried out by entering a boring tool into the opening defined by the adjacent regions of the rollers and cutting the profiles to the desired configuration, primarily by manual guidance.

The machine tool proposed by the present invention is computer controlled, preferably by computer numerical control, and includes a probe(46), arranged to sense the positions of the rollers (11, 12, 13) and to transmit the sensed position information to the computer(CNC). Thereafter, the computer (CNC) moves the tool holder (43) along one, simultaneously along two or simultaneously along three axes at right angles to one another in accordance with a predetermined programme to re-profile the rollers (11, 12, 13) to a desired configuration

Fig 3

## IMPROVEMENTS IN OR RELATING TO MACHINE TOOLS

This invention relates to machine tools and more particularly, but not exclusively, to a machine tool for profiling the peripheries of the rollers in tube rolling mill roller stand assemblies.

Tube rolling mill roller stand assemblies are used extensively in tube reduction mills and wherein hot tubing is continuously passed through an array of roller stand assemblies, often as many as 18 or 20 roller stand assemblies. Generally each roller stand assembly affects a reduction of the peripheral dimensions of the cross section of the tubing passing therethrough, with the exception of the last two or three roller stand assemblies, which are usually designed to correct imperfections and to impart the desired cross sectional configuration on the tubing.

A conventional tube rolling mill roller stand assembly generally comprises three rollers, mounted on driven shafts the axes of which are arranged at 120 degrees to one another and lie in a common plane at right angles to the direction of displacement of the tubing. The rollers have profiled peripheries and, at their most adjacent regions ( within their rotational axes and in the common plane of said axes), the rollers engage the tubing passing therethrough and impart compressive loading to the tubing to reduce the external dimensions of the cross- sectional configuration thereof.

As the rollers in each roller stand assembly do not make contact with one another at their most adjacent regions simple radiused peripheries on the rollers, based on a common radius centred on the axis of the tubing, would cause round tubing to deform into the gaps between the adjacent rollers. Experience has shown that if the periphery of each of the rollers has a particular configuration , defined in the art as "a triangle constructed of elliptical arcs", such deformation of the tubing between the rollers does not take place and the tubing retains a generally circular configuration.

A problem exists with tube rolling mill roller stand assemblies in that if one of the rollers in an assembly should become worn, or the profile of a roller is otherwise deformed, the total array of roller stand assemblies must be removed from operation, being replaced by a new array of roller stand assemblies. It is then the practise to re-profile the rollers in the damaged or worn roller stand assembly to the next size up in an overall array of roller stand assemblies.

As a roller stand assembly is a relatively complex device and the desired configuration is that defined by the rollers in combination it is impractical to strip the device to allow the rollers to be re-profiled in a conventional machine tool and it is therefore the practise to re-profile the rollers whilst they are assembled in the roller stand assembly.

The conventional method for profiling the rollers in a roller stand assembly is to drive the rollers through their conventional drive system and to enter a boring bar along the axis of the profile defined by the rollers in combination and, by angularly displacing the boring bar about said central axis with the rollers rotating, to cut a first profile, based on the radius of the edge of the cutting tool from the central axis, in the central region of each roller. Thereafter, the axis of the boring bar is displaced from the central axis to cut two further profiles, one to each side region of the periphery of each roller, to obtain a rough approximation of the desired periphery on each of the rollers.

The profile is then finished and polished by hand, using a profile gauge, to blend the three arcuate cuts into a single smooth profile and to contour the side edges of the rollers to avoid marking the tubing.

By this method the boring bar must be manually adjusted for each roller and the overall operation of machining and hand finishing can take up to eight hours and proves to be a costly operation.

An object of the present invention is to provide a machine tool capable of profiling the rollers in a tube rolling mill roller stand assembly and which allows the profiles to be machined more rapidly and with greater accuracy than conventional machine tools.

According to the present invention there is provided a machine tool, for profiling the rollers in a tube rolling roller stand assembly, comprising a tool holder and means for rotating the rollers in a roller stand assembly relative to the tool holder, characterized in that said tool holder is arranged for displacement along three axes at right angles to one another and the machine tool comprises means for displacing the tool holder along any one, simultaneously along any two or simultaneously along all three of said axes

Preferably the machine tool is characterized in that said machine tool comprises a bed, a first carriage slidably mounted on said bed for displacement along a first axis, a second carriage slidably mounted on said first carriage for displacement along a second axis and a third carriage slidably mounted on said second carriage for displacement along a third axis, said first, second and third axes being at right angles to one another.

In one embodiment the machine tool is characterized in that the displacement of the first carriage on said bed, the displacement of the second carriage on said first carriage and the displacement of said third carriage on said second carriage is affected by lead screws and the axes of said lead screws define the three axes along which the tool holder can be displaced.

With such an embodiment said lead screws preferably comprise precision ground re-circulating ball lead screws and, most preferably, said lead screws are driven via D. C. electric motors.

Preferably the machine tool is characterized by means for indexing the said tool holder about one of its axes of displacement and, most preferably, when the machine tool is arranged to process roller stand assemblies having three rollers the said tool holder is arranged to index through 120 degrees.

Preferably the machine tool includes a computer, with a profiling programme stored therein, arranged to control the said means for displacing the said tool holder along its three axes. Most preferably the said computer comprises a so-called "numerical control" computer

Preferably the machine tool is characterised in that it includes a probe, displaceable along three axes parallel to the three axes of displacement for the tool holder, and information reiating to a roller assembly detected by the probe is stored in said computer and used by the computer to control the position of the tool holder along its three axes of displacement during a roller profiling operation. In such an embodiment the probe may be arranged to detect position information relating to each of the rollers of a roller stand assembly and to transmit such information to the computer.

Preferably the bed includes a roller stand assembly support area.

The invention will now be described further, by way of example with reference to the accompanying drawings in which:

Fig. 1 shows, diagrammatically and in front view, the roller and drive arrangement for a conventional roller stand assembly,

Fig. 2 shows, diagrammatically, a plan view of a roller stand assembly having a roller and drive arrangement of the type shown in Fig. 1 and,

Fig. 3 shows, diagrammatically and in perspective view, machine tool in accordance with the present invention.

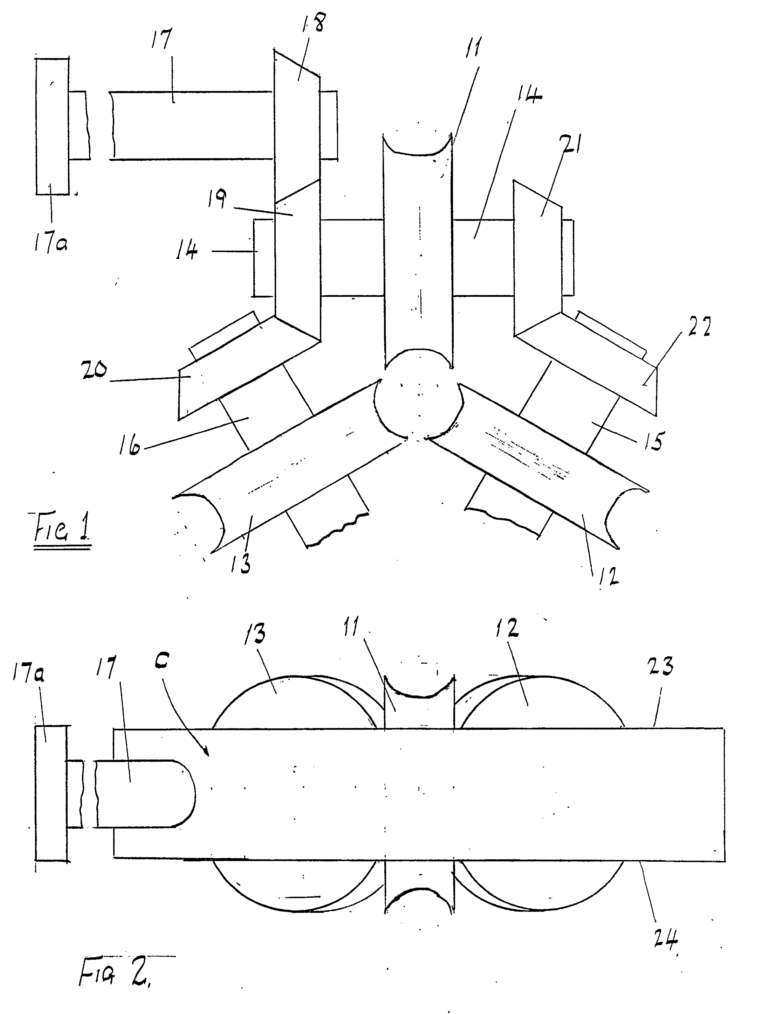

The conventional rolling mill roller set arrangement illustrated in Figs. 1 and 2 comprises three tube compression rollers, 11, 12 and 13 secured for rotation on shafts 14, 15 and 16 respectively, the axes of which lie at 120 degrees to one another and in a common plane at right angles to the direction of tube displacement when the roller stand assembly is in operation. A drive shaft 17 rotates a bevelled gear 18 which meshes with a bevelled gear 19 secured on shaft 14 and bevelled gear 19 further meshes with a bevelled gear 20 secured on shaft 16. At its end remote from bevelled gear 19 the shaft 14 supports a bevelled gear 21 which meshes with a bevelled gear 22 secured on shaft 15.

Thus, with the above arrangement, the drive shaft 17 is rotated through a coupling 17a to rotate bevelled gear 18, bevelled gear 18 transmits drive to bevelled gear 19 to rotate shaft 14, bevelled gear 19 rotates bevelled gear 20 to rotate shaft 16, and the rotation of shaft 14 is transmitted through bevelled gear 21 to bevelled gear 22 to rotate shaft 15. The gearing of bevelled gears 18, 19, 20, 21 and 22 is so selected that all said gears are rotated at the same speed and the rotational directions of the shafts 14,15 and 16 are such that the rollers 11,12 and 13 have a common direction of displacement at their adjacent regions in the plane of the axes of shafts 14, 15 and 16.

Thus, rollers 11, 12 and 13 are rotated at the same speed and have a common direction of displacement over those regions in contact with a tube passing therethrough.

The drive assembly is housed within a casing C which has two generally parallel faces 23 and 24, said side faces each having an opening thetherough, to allow passage for the tube being treated, with radial slots from said openings to allow the rollers 11, 12 and 13 to protrude through the casing C, as shown in Fig. 2.

The rollers 11, 12 and 13 are profiled to the conventional form, as will be seen from Fig. 1 in which the "triangle constructed of elliptical arcs" has been exaggerated for illustration purposes.

As described hereinbefore the conventional method for re-profiling worn or otherwise damaged rollers 11, 12 and 13 is to use a boring tool working in the adjacent regions of said rollers substantially in the plane common to the axes of the rollers.

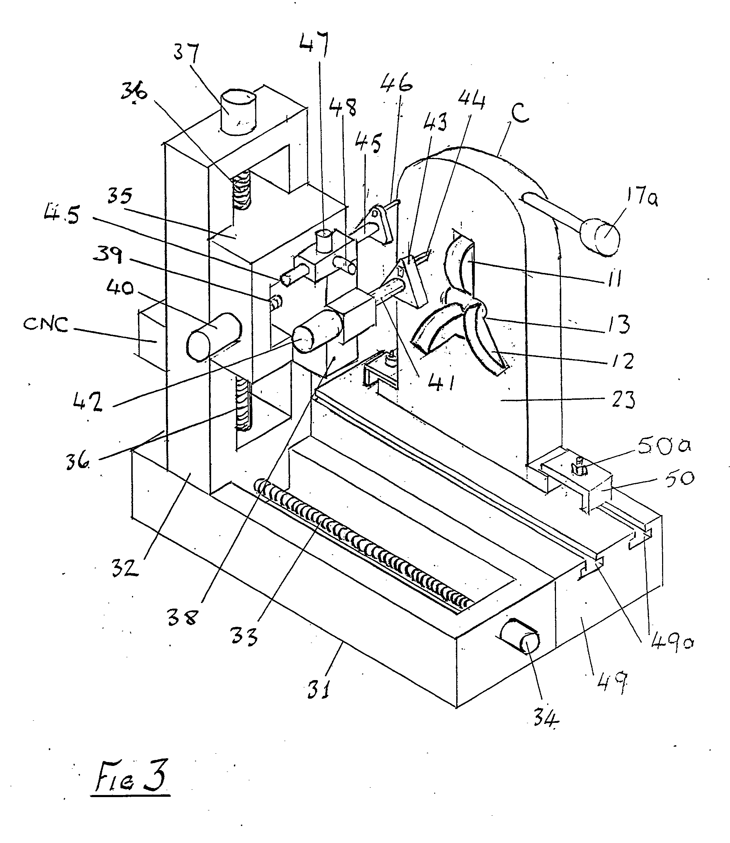

The machine tool proposed by the present invention and illustrated in Fig. 3 generally comprises a bed 31 with an upright carriage 32 slidably supported thereon, the displacement of the carriage 32 relative to bed 31 being controlled by a precision ground re-circulating ball lead screw 33 rotated by a motor 34.

A second carriage 35 is slidably attached to the carriage 32 for vertical displacement and the location of carriage 35 relative to carriage 32 is controlled by a precision ground re-circulating ball lead screw 36 rotated by a motor 37.

A third carriage 38 is slidably attached to the second carriage 35 for horizontal displacement relative to carriage 35, the displacement being controlled by a precision ground re-circulating ball lead screw 39 rotated by a motor 40.

The carriage 38 rotatably supports a tool spindle 41, rotatable by a motor 42, the axis of spindle 41 being substantially parallel to the axis of the lead screw 39, and the spindle 41 carries a tool holder 43 which supports a cutting tool 44.

The carriage 38 also supports a probe assembly comprising a slider 45, arranged for axial displacement in the direction of displacement of the carriage 38 relative to carriage 35, with a probe 46 on that end of the slider 45 most adjacent to the roller stand assembly. The slider 45 is axially displaceable by a motor 47 and the probe can be indexed through 120 degrees by a motor 48.

Information sensed by the probe 46 is transmitted to a computer CNC along leads, omitted for clarity in the drawings.

The machine tool also includes a work-piece support bed 49, which may be provided with conventional "T" grooves 49a in which bolts 50a may be anchored for clamping a roller assembly to the bed 49 via clamps 50.

In Fig. 3 the machine tool according to the invention is illustrated for profiling the rollers 11,12 and 13 of a tube rolling mill roller roller assembly, said assembly being secured to the roller stand assembly support bed 49 with its coupling 17a connected to a drive arrangement (not shown).

Before initiating the profile cutting operation each of the rollers 11,12 and 13 is first sensed by the probe 46, displacement of the probe 46 being affected by the motors 34, 37 and 40 displacing their respective carriages 32, 35 and 38 and the motors 47 and 48 displacing the slider 45. The probe may sense the side faces of each of the rollers 11, 12 and 13, the depth of the profile in each of the said rollers 11, 12 and 13 and the position of the horizontal axis passing through the centre of each of the rollers 11, 12 and 13 and which information is stored in the computer CNC. The motor 47 is then actuated to retract the probe to a safe position clear of the roller stand assembly.

Using the information received from the probe 46 the computer CNC then actuates the motors 34, 37 and 40 to locate the cutting tool in a position ready to start the re-profiling operation on a first selected roller (for example roller 11) and, again by controlling the motors, the computer CNC displaces the tool holder 43 in accordance with a predetermined programme to cause the tool 44 to cut the desired profile on the engaged roller 11.

When the roller 11 had been profiled the motor 42 is actuated to index the tool holder 43 through 120 degrees, clockwise to be in a position to profile roller 12 or anti-clockwise to profile the roller 13, and with the tool holder 43 indexed to the correct position for the cutting tool 44 the motors 34, 37, and 40 are actuated by the computer CNC, in accordance with the information supplied thereto by the sensing operation of the probe 46.The machine tool 44 is then displaced, relative to the rotating roller 12 or 13 to be profiled, with the computer instructing actuation of the motors 34, 37 and 40 in accordance with the predetermined programme to effectively profile the roller 12 or 13 being worked . With the second roller profiled the motor 42 again indexes the tool holder 43 through 120 degrees to bring the cutting tool 44 into appropriate position for profiling the third roller and, once again, under the control of the computer CNC the motors 34, 37 and 40 are actuated to cause the cutting tool 44 to effect the desired profiling of the third roller.

It will be appreciated that with the machine tool described above all three rollers 11, 12 and 13 can be most accurately profiled to the desired configuration under the control of the computer CNC and the profiling of all three rollers 11, 12 and 13 can be completed in less than one eight of the time taken for profiling by conventional means.

It will also be appreciated that the machine tool proposed by the invention, being displaceable along three axes at right angles to one another and having inspection probe 46 linked to a computer for storing information, is not limited to the profiling of rollers in a three roller stand assembly and such a machine tool may be used for a very wide variety of profiling work.

## Claims

1. A machine tool for profiling the rollers in a tube rolling roller assembly comprising a tool holder and means for rotating the rollers in a roller assembly relative to the tool holder, characterized in that said tool holder (43) is arranged for displacement along three axes at right angles to one another and the machine tool comprises means (34, 37, 40)for displacing the tool holder (43) along any one, simultaneously along any two or simultaneously along all three of said axes.

2. A machine tool according to claim 1, characterized in that said machine tool comprises a bed (31), a first carriage (32) slidably mounted on said bed (31) for displacement along a first axis, a second carriage (35)slidably mounted on said first carriage (32) for displacement along a second axis and a third carriage (38) slidably mounted on said second carriage (35) for displacement along a third axis, said first, second and third axes being at right angles to one another.

3 A machine tool according to claim 2, characterized in that the displacement of the first carriage (32) on said bed, the displacement of the second carriage (35) on said first carriage (32) and the displacement of said third carriage (38) on said second carriage (35) is affected by lead screws (33, 36, 39) and the axes of said lead screws (33, 36, 39) define the three axes along which the tool holder (43) can be displaced.

4 A machine tool according to claim 3, characterized in that said lead screws (33, 36, 39)- comprise precision ground re- circulating ball lead screws and said lead screws (33, 36, 39) are driven via D. C. electric motors (34, 37, 40).

5 A machine tool according to any preceding claim characterized by means (42) for indexing the said tool holder (43) about one of its axes of displacement.

6 A machine tool according to any of the preceding claims including a computer(CNC), with a profiling programme stored therein, arranged to control the said means (34, 37, 40) for displacing the said tool holder (43)along its three axes.

7 A machine tool according to claim 6 characterised in that said machine tool includes a probe (46), displaceable along three axes parallel to the three axes of displacement for the tool holder(43), and position information relating to a roller assembly detected by the probe (46) is stored in said computer (CNC) and used by the computer (CNC) to control the position of the tool holder (43) along its three axes of displacement during a roller profiling operation.

Fig 1

Fig 2.

Fig 3